# FASCICULE DE BREVET EUROPEEN

(11) **EP 2 550 470 B1**
(45) Date de publication et mention de la délivrance du brevet: **20.04.2016**
(21) Numéro de dépôt: 11713306.6
(22) Date de dépôt: 15.02.2011
(51) Int. Cl.: F16H 61/4148, F16H 61/4035, F16H 61/4043, F16H 61/4096, F16H 61/4061, B60K 25/02, B60K 6/12

(54) **HYBRIDATION HYDRAULIQUE LEGERE ET ENTRAINEMENT D'UNE PRISE DE FORCE SUR MOTEUR INDUSTRIEL**
LEICHTER HYDRALISCHER HYBRIDISIERUNGS- UND ZAPFWELLENANTRIEB EINES INDUSTRIEMOTORS
LIGHT HYDRAULIC HYBRIDIZATION AND POWER TAKE-OFF DRIVE ON AN INDUSTRIAL ENGINE

(30) Priorité: 25.03.2010 FR 1052154
(43) Date de publication de la demande: 30.01.2013
(73) Titulaire: Peugeot Citroën Automobiles SA, 78140 Vélizy Villacoublay (FR)
(72) Inventeur: LAMOUREUX, Louis, F-75014 Paris (FR)
(74) Mandataire: Laurin, Ghislain Nicolas
(86) Numéro de dépôt international: PCT/FR2011/050311
(87) Numéro de publication internationale: WO 2011/117493

(56) Documents cités:
- DE-A1-102006 050 873
- DE-A1-102008 002 386
- DE-A1-102008 015 729
- US-A- 4 215 545
- US-A1- 2006 068 970
- US-A1- 2008 295 507
- US-A1- 2009 173 066

## Description

La présente invention revendique la priorité de la demande française 1052154 déposée le 25 mars 2010 dont le contenu (texte, dessins et revendications) est ici incorporé par référence.

L'invention concerne les moteurs industriels hybridés comportant une prise de force hydraulique.

Les moteurs à combustion interne ou les moteurs électriques sont utilisés dans des nombreuses applications industrielles ou agricoles. Ces types de moteurs comportent un arbre de transmission du couple qu'ils fournissent à une charge mécanique, ou à une prise de force d'un outil industriel ou agricole.

Pour augmenter le couple disponible sur l'arbre d'un moteur à combustion interne, des solutions existent consistant par exemple en la modification, du moteur pour augmenter sa cylindrée, de la quantité d'air admise dans les cylindres (pression de suralimentation), de la quantité de carburant injectée dans les cylindres ou, en cherchant à diminuer les frottements du moteur.

Pour augmenter le couple sur l'arbre moteur, une autre solution consiste à démultiplier l'entraînement de la prise de force et à monter le régime de fonctionnement du moteur.

Ces solutions comportent des inconvénients, par exemple, la modification du moteur lui-même engendre un surcoût, une surconsommation de carburant, une augmentation de son encombrement, des risques en termes de fiabilité et des difficultés liées à la pollution. En outre, une augmentation de la puissance maximale délivrée par le moteur peut entraîner la modification de la classe de la norme à satisfaire (dans le cas de la norme « Tiers » par exemple destinée aux moteurs industriels, les moteurs de plus de 56kW sont soumis à des limites en émission de NOx beaucoup plus contraignantes).

Une autre solution de l'état de l'art dite « d'hybridation » consiste à coupler au moteur principal une autre motorisation de type moteur électrique ou de type moteur hydraulique. Néanmoins une solution avec moteur électrique pour augmenter le couple du moteur principal nécessite l'utilisation d'une réserve d'énergie électrique, par exemple des batteries, avec les problèmes de durée de vie et d'entretien liés à ce type de réserve d'énergie électrique.

Dans certaines applications, le moteur est destiné à fournir également un couple à une prise de force secondaire, par exemple, à une pompe hydraulique ou à un outil agricole. La prise de force peut être couplée directement au vilebrequin d'un moteur thermique ou à travers un système de démultiplication de type à rapport de démultiplication fixe ou variable. Ce système de démultiplication peut être de type discret, par exemple des engrainages, ou de type continu tel que l'entraînement par courroie et flasques.

La puissance du moteur peut être délivrée sur la prise de force par l'intermédiaire d'un fluide sous pression. Dans ce cas, un circuit hydraulique est utilisé, ledit circuit hydraulique comportant une pompe hydraulique en liaison mécanique avec le moteur pour être entraînée par l'arbre du moteur et un élément hydraulique (moteur ou vérin) lui-même en liaison mécanique avec la prise de force de l'outil à mouvoir. Le fluide sous pression transmet la puissance de la pompe hydraulique à l'élément hydraulique couplé à la prise de force. Le taux de rotation de l'outil dépend du choix des cylindrées de la pompe hydraulique et du moteur hydraulique et donc un débit de fluide. La pompe et/ou le moteur hydraulique peuvent être des systèmes à cylindrée variable pour piloter le régime de l'outil.

Il existe un grand nombre de solutions d'hybridation notamment dans le domaine des véhicules automobiles. Ces solutions sont essentiellement basées sur la modification du système complet du véhicule comprenant la chaîne de transmission du véhicule. L'hybridation est réalisée à l'aide d'un ou plusieurs moteurs/générateurs électriques (un moteur électrique pouvant être configuré en générateur électrique). Le stockage de l'énergie s'effectue par des accumulateurs électriques (batteries)

L'hybridation peut être réalisée également par un ou plusieurs moteurs hydrauliques ou une ou plusieurs pompes hydrauliques. Une machine hydraulique peut réaliser, soit la fonction de pompe, soit la fonction de moteur hydraulique. Dans l'hybridation hydraulique, le stockage de l'énergie s'effectue par des accumulateurs hydrauliques.

La solution d'hybridation dite totale utilise des systèmes de transmission d'énergie capables de faire fonctionner le véhicule sans démarrage du moteur à combustion interne (moteur principal). Dans le cas d'une hybridation totale de type hydraulique, le couplage entre les roues du véhicule et le moteur peut se faire de manière exclusivement hydraulique.

Dans le cas d'hybridations dites légères, un moteur additionnel permet d'obtenir sur l'arbre du moteur principal (moteur thermique) un couple total supérieur au seul couple généré par le moteur à combustion interne. C'est le cas de l'utilisation dans un véhicule automobile de l'altermo-démarreur en mode dit « mode boost ».

Le document DE 10 2008 002386 A1 divulgue un dispositif de motorisation hybride conformément au préambule de la revendication 1.

Pour pallier les inconvénients des dispositifs de motorisation hybride légère de l'état de l'art, l'invention propose un dispositif de motorisation hybride légère comportant un moteur à combustion interne MCI accouplé, d'une part, à un récepteur principal RP et, d'autre part, par un moyen mécanique de transmission de couple, à une unité pompe/moteur à cylindrée fixe, un circuit hydraulique renfermant, outre l'unité pompe/moteur, un moteur hydraulique destiné à entrainer en rotation une prise de force secondaire, un accumulateur haute pression renfermant une certaine quantité de fluide sous une haute pression, un réservoir basse pression capable de contenir une quantité de fluide suffisant pour remplir l'accumulateur haute pression et comprenant, un distributeur hydraulique principal entre une partie du circuit hydraulique renfermant l'unité pompe/moteur et une autre partie du circuit hydraulique renfermant le moteur hydraulique et l'accumulateur hydraulique haute pression, le distributeur hydraulique principal pouvant être commandé, soit dans un état fermé, interrompant la circulation de fluide entre les deux parties du circuit hydraulique pour mettre le dispositif dans un état dit de repos, soit dans un état ouvert parallèle durant lequel l'unité pompe/moteur est destinée à fonctionner en pompe hydraulique, soit dans un état ouvert croisé durant lequel l'unité pompe/moteur est destinée à fonctionner en moteur hydraulique,
caractérisé en ce qu'il comporte en plus:
- un distributeur hydraulique d'embrayage en parallèle avec l'unité pompe/moteur, ledit distributeur d'embrayage pouvant être commandé, soit dans un état fermé pour faire passer le fluide de l'unité pompe/moteur dans le circuit hydraulique, soit dans un état ouvert pour dériver le passage du fluide de l'unité pompe/moteur par le ledit distributeur d'embrayage,
- un distributeur de moteur hydraulique pouvant être commandé, soit dans un état fermé pour isoler le moteur hydraulique du circuit hydraulique, soit dans un état ouvert pour permettre le passage du fluide dans le moteur hydraulique,
- un régulateur de pression hydraulique comportant une entrée de contrôle Er du niveau d'ouverture du régulateur pour contrôler le débit de fluide dans le moteur hydraulique,
- un distributeur d'accumulateur hydraulique pouvant être commandé, soit dans un état ouvert permettant le remplissage ou la vidange de l'accumulateur haute pression au travers de l'unité pompe/moteur, soit dans un état fermé pour isoler l'accumulateur haute pression du circuit hydraulique,
- un calculateur UC configuré pour commander, les états des distributeurs hydrauliques, le niveau d'ouverture du régulateur de pression, le régime moteur du moteur à combustion interne MCI, en fonction de différentes configurations de fonctionnement du dispositif.

Avantageusement, dans une utilisation du dispositif, de charge de l'accumulateur haute pression, le distributeur de moteur hydraulique et le distributeur hydraulique d'embrayage étant respectivement commandés dans l'état fermé, le distributeur hydraulique d'accumulateur dans l'état ouvert, le distributeur hydraulique principal est commandé dans l'état ouvert parallèle pour faire fonctionner l'unité pompe/moteur en pompe hydraulique prélevant, par l'intermédiaire du moyen mécanique de transmission de couple, un couple sur le moteur à combustion interne pour débiter du fluide sous pression dans l'accumulateur haute pression depuis le réservoir basse pression.

Dans une utilisation du dispositif de décharge de l'accumulateur haute pression, le distributeur de moteur hydraulique et le distributeur hydraulique d'embrayage étant respectivement commandés dans l'état fermé, le distributeur hydraulique d'accumulateur dans l'état ouvert, le distributeur hydraulique principal est commandé dans l'état ouvert croisé, l'accumulateur hydraulique débitant alors du fluide sous pression dans l'unité pompe/moteur fonctionnant en moteur hydraulique pour fournir, par l'intermédiaire du moyen mécanique de transmission de couple, un couple additionnel au moteur à combustion interne, le calculateur étant configuré pour contrôler le couple total fourni au récepteur principal par la gestion du couple moteur du moteur à combustion interne.

Dans une réalisation du dispositif, le calculateur est également configuré pour contrôler le couple moteur du moteur à combustion interne à partir de mesures de pression dans l'accumulateur haute pression.

Dans une utilisation du dispositif pour un entraînement de la prise de force en régime nominal, le distributeur de moteur hydraulique étant dans l'état ouvert, le distributeur d'embrayage hydraulique étant dans l'état fermé, le distributeur d'accumulateur étant commandé dans l'état fermé et le régulateur de pression étant commandé dans l'état d'ouverture maximal, le distributeur hydraulique principal est commandé dans l'état ouvert parallèle, pour faire fonctionner l'unité pompe moteur en pompe hydraulique entrainée par le moteur à combustion interne, l'intégralité du débit de fluide fournit par l'unité pompe/moteur étant délivré au moteur hydraulique.

Dans une utilisation du dispositif pour un entraînement de la prise de force en régime variable, le distributeur de moteur hydraulique étant dans l'état ouvert, le distributeur hydraulique d'accumulateur étant dans l'état ouvert, le distributeur hydraulique principal étant commandé dans l'état ouvert parallèle, pour faire fonctionner l'unité pompe/moteur en pompe hydraulique entrainée par le moteur à combustion interne, le calculateur est configuré pour commander le distributeur hydraulique d'embrayage dans l'état ouvert puis dans l'état fermé de manière cyclique, le débit de fluide dans le moteur hydraulique étant fonction du rapport cyclique entre le temps d'ouverture et le temps de fermeture du distributeur hydraulique d'embrayage.

Dans une autre réalisation, le calculateur est configuré également pour commander le niveau d'ouverture du régulateur de pression de manière à obtenir une pression en amont du régulateur de pression supérieure à la pression en entrée du moteur hydraulique, l'accumulateur haute pression faisant alors office d'amortisseur hydraulique.

Dans une autre réalisation, l'ensemble hydraulique formé par l'unité pompe/moteur en parallèle avec le distributeur d'embrayage est relié, par un des accès de fluide dudit ensemble, au distributeur principal par un clapet anti-retour de fluide.

Dans une autre réalisation, l'accumulateur comporte un capteur de pression fournissant au calculateur une information de pression dans ledit accumulateur, le calculateur étant configuré pour commander le distributeur hydraulique principal dans l'état fermé et le distributeur d'embrayage dans l'état ouvert, lorsqu'une consigne de pression dans l'accumulateur, enregistrée dans le calculateur, est atteinte.

Dans une autre réalisation le moyen de transmission de couple entre le moteur à combustion interne et l'unité pompe/moteur à cylindrée fixe comporte une poulie solidaire d'un arbre moteur du moteur à combustion interne, une poulie solidaire d'un arbre de l'unité pompe/moteur et une courroie de transmission entre les deux poulies.

Un objectif de cette invention est de réaliser un dispositif d'hybridation légère comportant une prise de force pouvant être contrôlée en régime en utilisant une unité pompe/moteur à cylindrée fixe fonctionnant soit en pompe hydraulique soit en moteur hydraulique et la méthode de contrôle associée.

Un autre objectif est de rendre indépendant le taux de rotation de la prise de force du taux de rotation du moteur à combustion interne.

L'invention sera mieux comprise à l'aide d'un exemple de réalisation d'un dispositif de motorisation hybride légère et la description de son fonctionnement en référence aux figures indexées dans lesquelles :
- la figure 1 montre un exemple de dispositif de motorisation hybride légère, selon l'invention, comportant une transmission hydraulique pour prise de force ;
- la figure 2 montre la configuration du dispositif de la figure 1 en position de charge d'un accumulateur haute pression du dispositif ;
- la figure 3 montre la configuration du dispositif de la figure 1 en position de décharge de l'accumulateur haute pression ;
- la figure 4 montre la configuration du dispositif de la figure 1 en position d'entraînement de la prise de force en régime nominal ;
- les figures 5a et 5b montrent le dispositif de motorisation de la figure 1, selon l'invention, dans une configuration de régime variable de la prise de force et ;
- les figures 6a, 6b, 6c et 6d représentent différents graphiques de fonctionnement d'un exemple de réalisation chiffrée du dispositif de la figure 1.

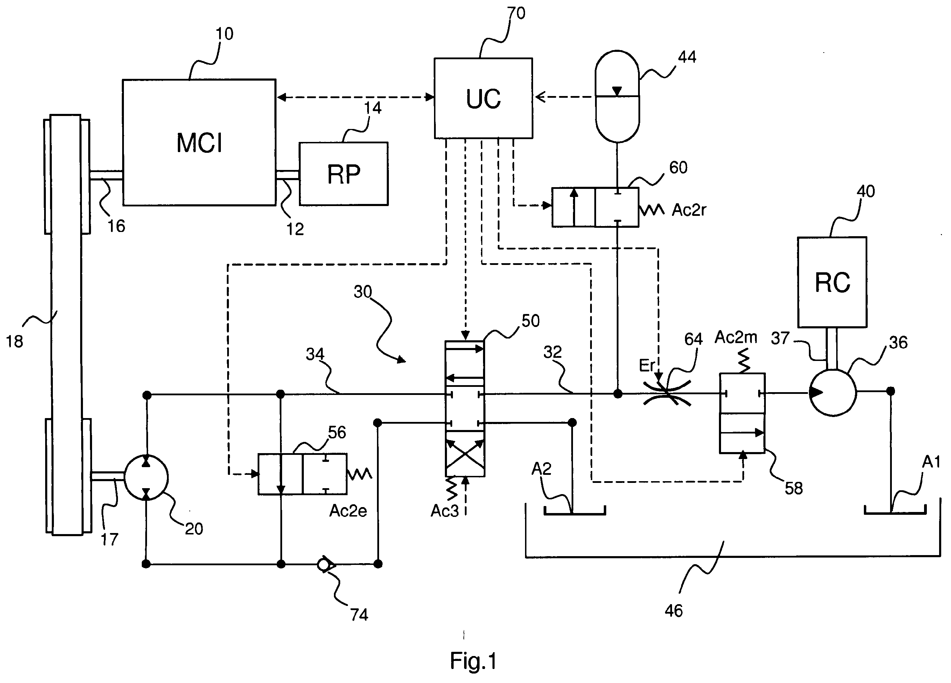

La figure 1 montre un exemple de dispositif de motorisation hybride légère, selon l'invention, comportant une transmission hydraulique pour prise de force.

Le dispositif de la figure 1 comporte un moteur à combustion interne MCl 10 accouplé par un premier arbre de transmission 12 à un récepteur principal RP 14. Le moteur à combustion interne est aussi couplé, par un deuxième arbre de transmission 16 et un dispositif de transmission de couple 18 par poulie et courroie, à l'arbre de transmission 17 d'une unité pompe/moteur 20 à cylindrée fixe.

Le dispositif de motorisation comporte un circuit hydraulique 30 renfermant, outre, l'unité pompe/moteur 20, un moteur hydraulique 36 à cylindrée fixe couplé par une prise de force 37 à un récepteur de couple 40, un accumulateur 44 haute pression renfermant une certaine quantité de fluide sous une haute pression, un réservoir basse pression 46 capable de contenir une quantité de liquide suffisant pour remplir l'accumulateur haute pression 44.

Le circuit hydraulique 30 comporte, en outre, un distributeur hydraulique principal 50 entre une partie 34 du circuit hydraulique 30 renfermant l'unité pompe/moteur 20 et une autre partie 32 du circuit hydraulique 30 renfermant le moteur hydraulique 36, un distributeur d'embrayage 56 à deux états en parallèle avec l'unité pompe/moteur 20, un distributeur de moteur hydraulique 58 à deux états pour interrompre ou laisser passer le fluide dans le moteur hydraulique 36, un distributeur d'accumulateur 60 à deux états pour isoler ou mettre en communication fluidique l'accumulateur 44 haute pression avec le circuit hydraulique.

Le distributeur hydraulique principal 50, comportant deux conduits pour le passage du fluide, coopère avec un actionneur électrique Ac3 pour mettre ledit distributeur principal, soit dans un état fermé, interrompant la circulation de fluide dans les deux conduits du distributeur et mettre le dispositif de motorisation hybride dans un état dit de repos, soit dans un état ouvert parallèle laissant passer le fluide dans les deux conduits du distributeur, durant lequel, l'unité pompe/moteur 20 fonctionne en pompe hydraulique pour remplir l'accumulateur haute pression 44 et/ou entraîner en rotation le moteur hydraulique 36, soit dans un état ouvert croisé produisant l'inversion de fluide dans le distributeur principal 50 et durant lequel l'unité pompe/moteur fonctionne en moteur hydraulique pour fournir un couple supplémentaire au moteur à combustion interne 10.

Le distributeur d'embrayage hydraulique 56 de l'unité pompe/moteur 20, à deux états, coopère avec un actionner électrique de commande Ac2e pour être mis, soit dans un état ouvert pour faire circuler le fluide de l'unité pompe/moteur 20 dans le distributeur d'embrayage 56 (sorte de court-circuit hydraulique du circuit hydraulique 30), soit dans un état fermé interrompant le passage du fluide dans le distributeur pour permettre le passage du fluide dans le circuit hydraulique 30.

Le distributeur de moteur hydraulique 58 à deux états coopère avec un actionner électrique de commande Ac2m pour mettre ledit distributeur, soit dans l'état fermé pour isoler le moteur hydraulique 36 du circuit hydraulique 30, soit dans l'état ouvert pour permettre le passage du fluide dans le moteur hydraulique.

Le distributeur d'accumulateur hydraulique 60 à deux états, coopère avec un actionner électrique de commande Ac2r pour permettre le remplissage de l'accumulateur 44 haute pression lorsque le distributeur d'accumulateur 60 est dans l'état ouvert, soit pour isoler l'accumulateur 44 haute pression lorsque ledit distributeur est dans l'état fermé.

Le dispositif de motorisation hybride selon l'invention, comporte un calculateur UC 70 ayant pour fonction, entre autre, de commander les actionneurs Ac3, Ac2e, Ac2m, Ac2r des différents distributeurs hydrauliques en fonction de différentes configurations de fonctionnement du dispositif de motorisation hybride décrites par la suite.

La partie 32 du circuit hydraulique 30, d'un côté du distributeur principal 50, reliée à un accès de fluide dudit distributeur principal, comporte l'accumulateur haute pression 44 en série avec le distributeur d'accumulateur hydraulique 60 et, relié au même accès du distributeur principal 50, un régulateur de pression de fluide 64 du moteur hydraulique 38 par l'intermédiaire du distributeur de moteur hydraulique 58, la sortie libre du moteur hydraulique étant relié à un accès hydraulique A1 du réservoir basse pression 46. L'autre accès, du même côté du distributeur principal 50, est relié à un autre accès A2 de fluide de l'accumulateur basse pression 46.

Le régulateur de pression 64 comporte une entré Er de contrôle du niveau d'ouverture dudit régulateur pour régler le débit de fluide traversant le régulateur de pression 64 et donc, dans le moteur hydraulique 36.

L'autre partie 34 du circuit hydraulique, de l'autre côté du distributeur principal 50, comporte un ensemble hydraulique ayant l'unité pompe/moteur 20 en parallèle avec le distributeur d'embrayage 56, l'ensemble hydraulique est relié par un des ses accès hydrauliques à un des accès du distributeur principal 50, dudit autre côté dudit distributeur principal, l'autre accès hydraulique de l'ensemble hydraulique étant relié par l'intermédiaire d'un clapet anti-retour 74 à l'autre accès, du même autre côté, du distributeur principal 50.

Par la suite sont décrits, en références aux figures 1 à 5b, les différentes configurations de fonctionnement du dispositif de motorisation hybride selon l'invention.

La figure 1 montre la configuration du dispositif en position de repos. Le calculateur 70 commande les actionneurs Ac3, Ac2e,-Ac2m, Ac2r des distributeurs hydrauliques de façon que, dans l'état de repos du dispositif de motorisation, le distributeur principal 50 soit fermé (ou dans l'état fermé), le distributeur d'embrayage 56 de l'unité pompe/moteur 20 est ouvert. Le distributeur de moteur hydraulique 58 est fermé isolant le moteur hydraulique 36 du circuit hydraulique 30, le distributeur d'accumulateur hydraulique 60 est ouvert mais l'accumulateur haute pression 44 ne se vide pas du fait de l'état fermé du distributeur principal 50.

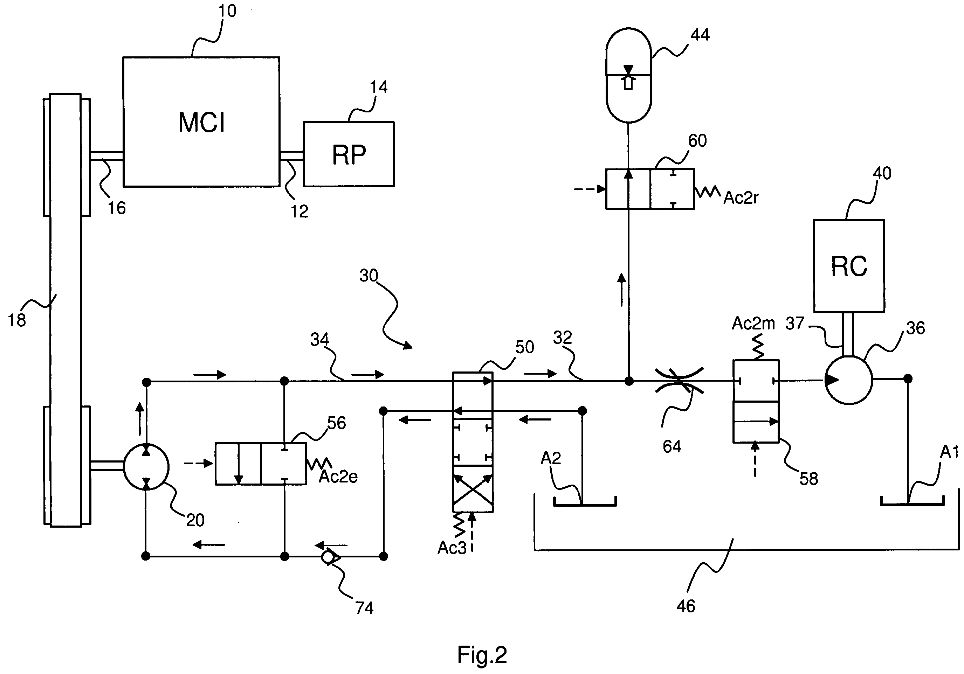

La figure 2 montre la configuration du dispositif de la figure 1 en position de charge d'un accumulateur haute pression du dispositif.

Le calculateur 70 commande les actionneurs des distributeurs hydrauliques pour mettre :
- le distributeur d'accumulateur 60 dans l'état ouvert,
- le distributeur de moteur hydraulique 58 dans l'état fermé,
- le distributeur d'embrayage 56 de l'unité pompe/moteur 20, dans l'état fermé,
- le distributeur principal 50 en position ouvert parallèle, reliant, d'une part, l'ensemble hydraulique unité pompe/moteur 20 en parallèle avec le distributeur d'embrayage 56 au régulateur de pression 64 et à l'accumulateur haute pression 44 et d'autre part, un des accès du clapet anti-retour 74 à l'accès hydraulique A2 du réservoir basse pression 46,

Dans cette configuration, en positon de charge de l'accumulateur 44 haute pression, l'unité pompe/moteur 20 est utilisée comme pompe hydraulique. L'unité pompe/moteur 20 prélève un couple sur le moteur à combustion interne 10 pour débiter un fluide sous pression depuis le réservoir basse pression 46, à travers le clapet anti-retour 74, vers l'accumulateur 44 haute pression. Lorsqu'une pression de consigne enregistrée par le calculateur 70 est atteinte dans l'accumulateur 44 haute pression, le calculateur 70 commande à nouveau les distributeurs pour mettre le dispositif de motorisation en position de repos.

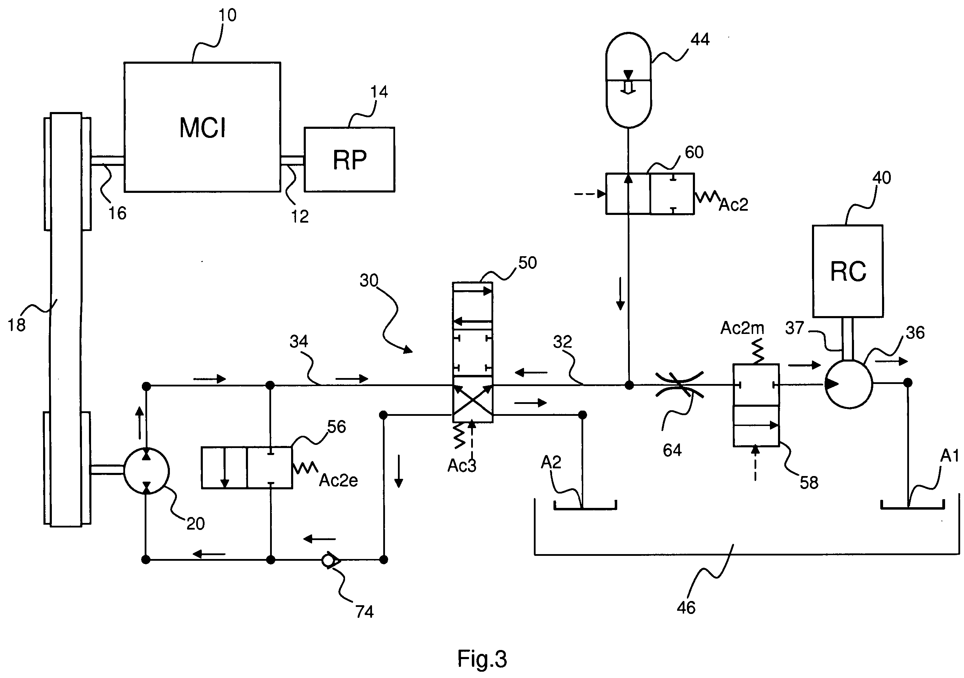

La figure 3 montre la configuration du dispositif de la figure 1 en position de décharge de l'accumulateur haute pression.

Le calculateur 70 commande les actionneurs des distributeurs hydrauliques pour mettre :
- le distributeur principal 50 en positon ouvert croisée,
- le distributeur d'accumulateur hydraulique 60 dans l'état ouvert,
- le distributeur de moteur hydraulique 58 dans l'état fermé pour isoler le moteur hydraulique 36 du circuit hydraulique
- le distributeur d'embrayage 56, en parallèle avec l'unité pompe/moteur 20, dans l'état fermé.

Dans cette configuration de décharge de l'accumulateur 44, l'unité pompe/moteur 20 est utilisée comme moteur hydraulique du fait de l'inversion du fluide dans le distributeur principal 50 dans l'état ouvert croisé. L'accumulateur hydraulique débite le fluide sous pression à travers le distributeur principal 50 et le clapet anti-retour 74 pour faire tourner l'unité pompe/moteur 20 fournissant par l'intermédiaire du dispositif de transmission de couple 18 et le deuxième arbre 16 un couple additionnel au moteur à combustion interne 10 et, par conséquent, à l'élément récepteur principal 14.

Le couple additionnel fourni à l'élément récepteur principal 14 est généré par la décharge de l'accumulateur 44 haute pression. Ce couple additionnel n'est pas contrôlable. Le couple total fourni par l'élément récepteur principal 14 est contrôlé par la gestion du couple moteur du moteur à combustion interne 10 à partir d'une mesure de pression dans l'accumulateur hydraulique 44 enregistrée par le calculateur 70.

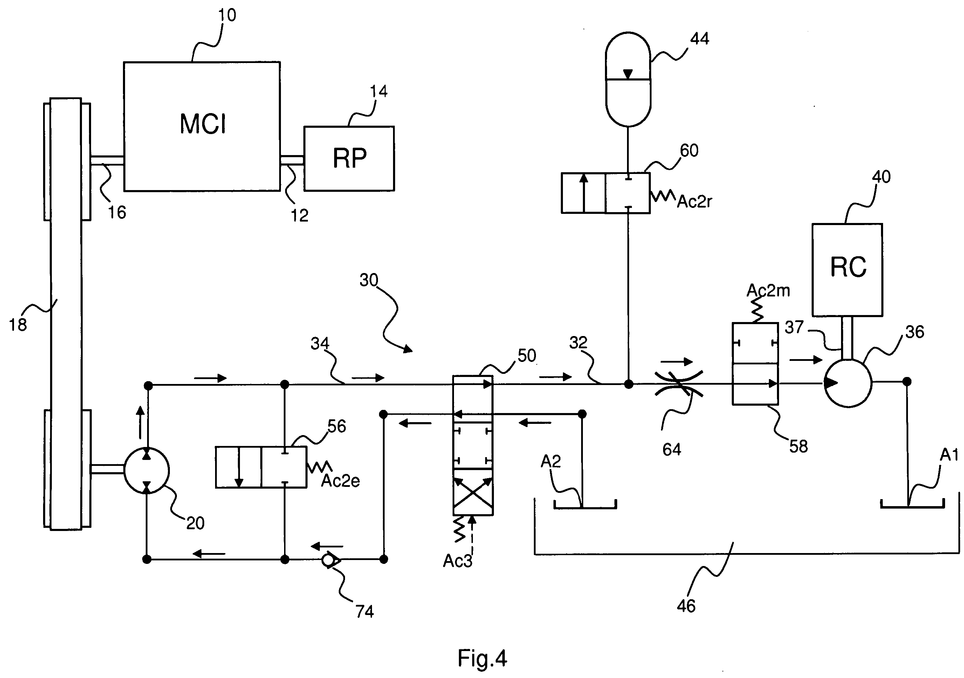

La figure 4 montre la configuration du dispositif de la figure 1 en position d'entraînement de la prise de force en régime nominal.

Le calculateur 70 commande le régulateur de pression et les actionneurs des distributeurs hydrauliques pour mettre :
- le distributeur principal 50 en position ouvert parallèle,
- le distributeur d'accumulateur 60 dans l'état fermé,
- le distributeur d'embrayage 56 dans l'état fermé,
- le distributeur de moteur hydraulique 58 dans l'état ouvert,
- le régulateur de pression 64 en position d'ouverture maximale.

Dans cette configuration de la figure 4, l'unité pompe/moteur 20 est utilisée en pompe hydraulique entraînée en rotation par le moteur à combustion interne 10, la pompe hydraulique fournissant l'intégralité de son débit de fluide dans le moteur hydraulique 36 à travers le régulateur de pression 64 et le distributeur de moteur hydraulique 36.

Dans cette configuration de la figure 4, la vitesse de rotation de la prise de force 37 secondaire est fixée par :
- le régime du moteur à combustion interne 10,
- le rapport de l'entraînement mécanique 18,
- la cylindrée de l'unité pompe/moteur 20,
- la cylindrée du moteur hydraulique 36 pour la prise de force secondaire 37.

Dans une autre configuration du dispositif en position d'entraînement de la prise de force en régime variable, le calculateur 70 commande le régulateur de pression et les actionneurs des distributeurs hydrauliques pour mettre :
- le distributeur principal 50 en position ouvert parallèle,
- le distributeur de moteur hydraulique 58 dans l'état ouvert,
- le distributeur d'accumulateur 60 dans l'état ouvert,

Le distributeur d'embrayage 56, faisant office d'embrayage hydraulique de la l'unité pompe/moteur 20, est commandé en ouverture et en fermeture de manière cyclique en fonction du temps T par le calculateur 70 selon un rapport cyclique entre le temps d'ouverture Ti et le temps suivant de fermeture Ti+1 du distributeur d'embrayage 56, et ceci de façon à obtenir une pression au niveau de l'accumulateur 44 haute pression supérieure à la pression d'entrée du moteur hydraulique 36. C'est une condition nécessaire d'utilisation de l'accumulateur 44 haute pression comme amortisseur hydraulique.

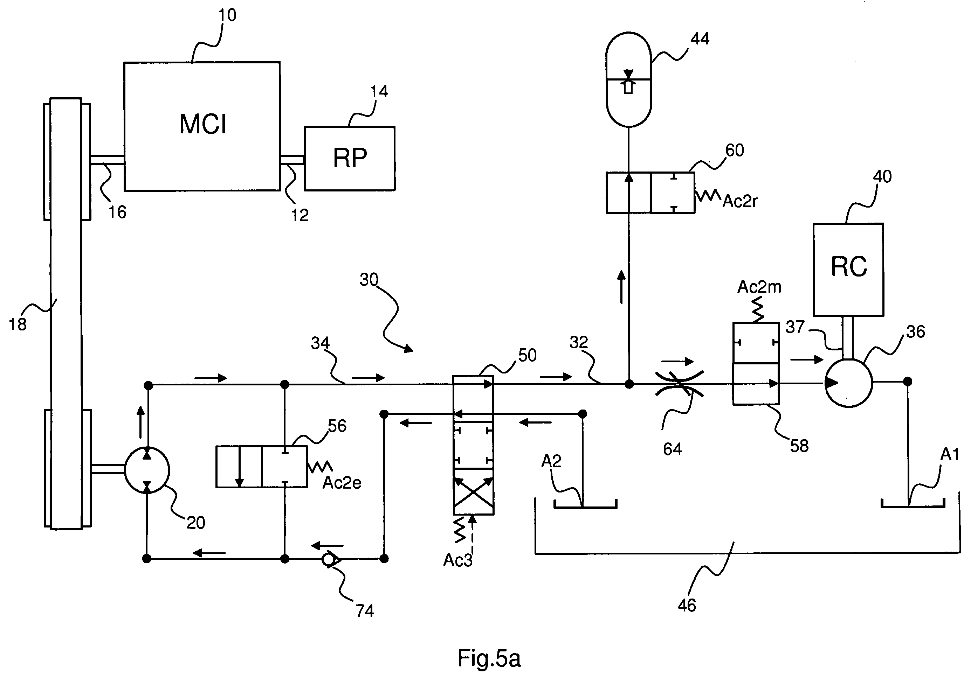

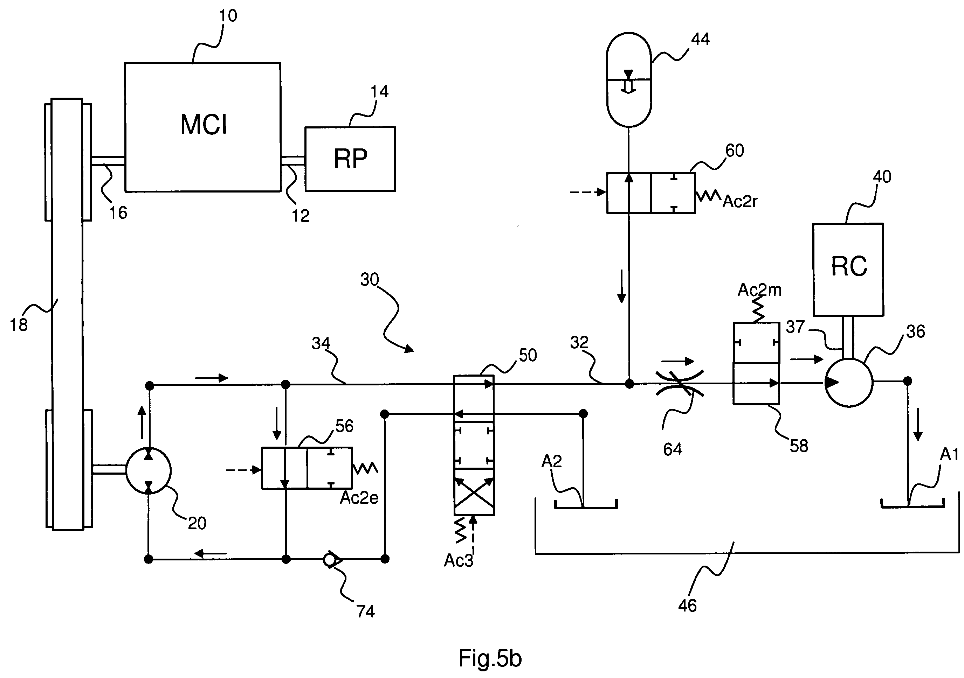

Les figures 5a et 5b montrent le dispositif de motorisation de la figure 1, selon l'invention, dans les deux configurations du fonctionnement en régime variable de la prise de force.

Les figures 5a et 5b montrent le dispositif de motorisation respectivement dans les deux états d'un fonctionnement cyclique permettant de contrôler le débit du fluide envoyé au moteur hydraulique 36 de la prise de force. Ces deux cycles sont répétés de manière très rapide, c'est le même principe de rapport cyclique d'ouverture que l'on retrouve sur les commandes pneumatiques des turbocompresseurs.

La figure 5a montre le dispositif dans le premier temps du cycle de fonctionnement.

Dans le premier temps Ti du cycle, l'unité pompe/moteur fonctionne en pompe hydraulique entraînée par le moteur à combustion interne 10 et débite à la fois dans l'accumulateur 44 et dans le moteur hydraulique 36, à cet effet, le distributeur d'embrayage 56 est en position fermé et les distributeurs d'accumulateur 60 et de moteur hydraulique 58 sont en position ouvert. La pression en amont du régulateur de pression 64 est fixée par la pression de fluide qui règne dans l'accumulateur 44. La pression en aval du régulateur de pression 64 est contrôlée par l'entrée Er de commande du régulateur de pression 64. La quantité de fluide débitée dans le moteur hydraulique 36 est donc une fonction du rapport de pressions entre la pression aval et la pression amont du régulateur de pression 64.

La figure 5b montre le dispositif de motorisation dans le deuxième temps du cycle de fonctionnement.

Dans ce deuxième temps Ti+1 du cycle, le distributeur d'embrayage 56 est en position ouvert, l'unité pompe/moteur 20, tourne en circuit fermé à travers le distributeur d'embrayage 56 en parallèle avec l'unité pompe/moteur 20. Grâce au clapet anti-retour 74, l'accumulateur hydraulique 44 ne débite que dans le moteur hydraulique 36 à travers le régulateur de pression 64. Le débit de fluide qui passe dans le moteur hydraulique 36 est une fonction du rapport de pression entre la pression aval et la pression amont du régulateur de pression 64

La valeur du débit de fluide traversant le moteur hydraulique 36 et donc la pression sur le moteur hydraulique 36 peut être contrôlée par le rapport cyclique d'ouverture/fermeture du distributeur d'embrayage 56 et le niveau d'ouverture du régulateur de pression 64. Le contrôle du couple et du taux de rotation du moteur hydraulique 36 est assuré par le contrôle dudit rapport cyclique.

Si le passage d'un cycle à l'autre suivant par la fermeture et l'ouverture du distributeur d'embrayage 56 est suffisamment rapide (de l'dre du dixième de seconde, voir de la seconde), la pression qui règne dans l'accumulateur hydraulique 44 reste quasiment inchangée. Le débit et la pression traversant le moteur hydraulique 36 restent donc inchangés.

A titre d'exemple, nous supposerons une configuration dont les éléments hydrauliques du dispositif selon l'invention ont les caractéristiques suivantes :
- unité pompe/moteur hydraulique 20 à cylindrée fixe ayant un débit de : 5cl/révolution.
- rapport d'entraînement entre l'arbre 16 du moteur à combustion interne 10 et l'unité pompe/moteur 20 : 3 (soit un taux de rotation de l'unité pompe/moteur 3 fois supérieur à celui du moteur à combustion interne)
- capacité de l'accumulateur hydraulique 44 haute pression de type à vessie: 3 litres, pression initiale de 50 bar.

Nous supposerons pour le reste de l'explication que le moteur à combustion interne 10 tourne à une vitesse de 2000 tr/min, soit un régime de l'unité pompe/moteur hydraulique de 6000tr/min. A ce régime, l'unité pompe/moteur fonctionnant en pompe hydraulique 20 délivre un débit de 30l/min. Il n'est pas fait d'hypothèse sur le type de moteur hydraulique 36, ni sur la prise de force 40, on suppose seulement que son fonctionnement nécessite dans ce cas de figure une pression d'alimentation de 100bar, et un débit de 101/min.

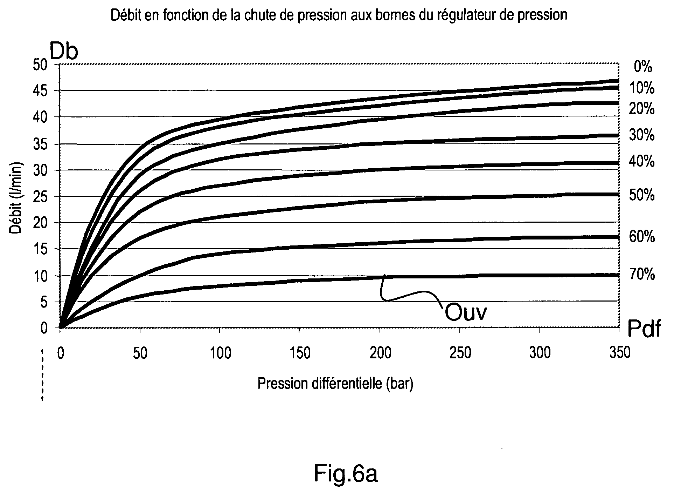

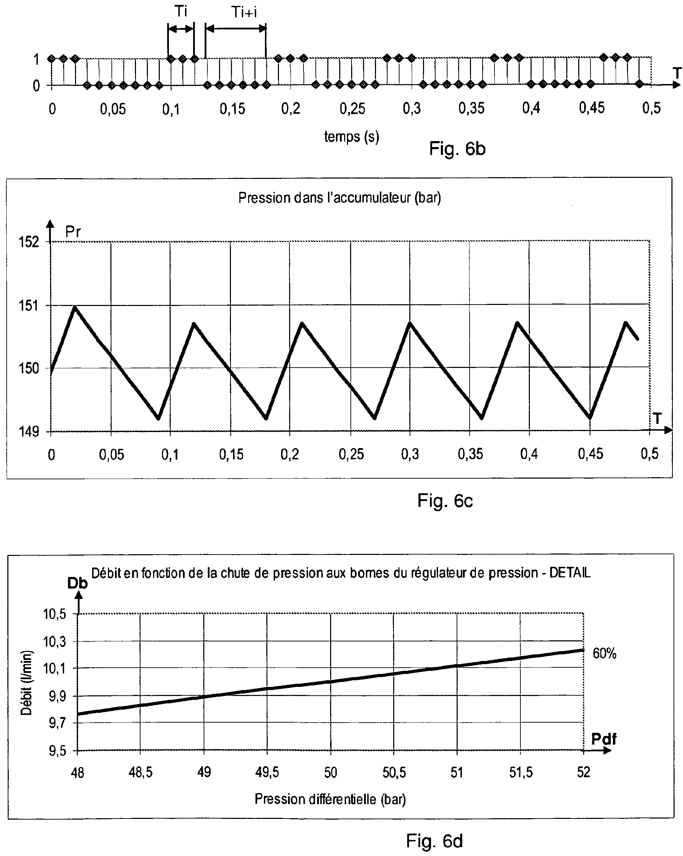

Les figures 6a, 6b, 6c et 6d représentent différents graphiques de fonctionnement d'un exemple de réalisation chiffrée du dispositif de la figure 1.

Le graphique de la figure 6a montre le débit Db en fonction de la chute de pression Pdf aux bornes du régulateur de pression 64 du dispositif de motorisation en fonction du niveau d'ouverture Ouv en pourcentage de l'ouverture totale de 100% du régulateur de pression 64.

Le graphique de la figure 6a caractérise le fonctionnement de régulateur de pression 64. Pour une chute de pression de 50 bars, avec une ouverture de 60%, on obtient un débit de 10l/min.

La pression nécessaire en aval du régulateur de pression 64 doit être de 150bars (chute de pression 50bars). Il faut noter qu'il existe d'autres points de fonctionnement possibles en fonction de la pression disponible en amont du régulateur de pression.

L'unité pompe/moteur hydraulique 20 tournant à 6000tr/min, le débit est de 30l/min. Il est donc nécessaire de ne faire fonctionner l'unité pompe/moteur 20 en pompe hydraulique que pendant un tiers du temps du cycle.

En faisant fonctionner l'unité pompe/moteur hydraulique 20 en pompe hydraulique de manière cyclique, il est possible d'obtenir un débit moyen de 10l/min. La présence de l'accumulateur hydraulique 44 dans le circuit hydraulique 30 permet d'obtenir une pression dans le circuit hydraulique variant faiblement autour d'une pression moyenne de consigne.

La figure 6b montre une suite de cycles d'ouverture/fermeture en fonction du temps T du distributeur d'embrayage 56 en parallèle avec l'unité pompe/moteur 20 fonctionnant en pompe hydraulique.

Pendant un temps Ti le distributeur d'embrayage 56 est fermé l'unité pompe/moteur 20 fonctionnant en pompe hydraulique est active (état 1 sur le graphique), puis pendant le temps suivant Ti+1, le distributeur d'embrayage 56 est ouvert, l'unité pompe/moteur 20 est inactive (état 0 sur le graphique).

La figure 6c montre la variation de la pression Pr dans le circuit hydraulique en amont du régulateur de pression 64 en fonction du temps T.

Dans cet exemple de réalisation, la pression Pr dans l'accumulateur 44 haute pression est maintenue entre 149 et 151 bars pour un débit moyen de 10l/mn.

La figure 6d montre le débit Db en fonction de la chute de pression Pdf aux bornes du régulateur de pression 64.

Le graphique de la figure 6d montre que la variation de pression en amont du régulateur de pression 64 d'environ 2bar fait varier le débit à l'entrée du moteur hydraulique 36 d'environ 0.11/min (soit 1%). A noter qu'en fonction du point de fonctionnement du régulateur de pression hydraulique 64, la fluctuation de débit peut être améliorée. En outre, en fonction de la technologie du régulateur de pression, la fluctuation de débit peut être minimisée par déplacement du point de fonctionnement du régulateur de pression.

L'exemple de réalisation du dispositif de motorisation selon l'invention des figures 1 à 5b n'est pas limitatif. Par exemple, on peut imaginer un grand nombre de solutions d'entraînement de l'unité pompe/moteur 20 autres que celle d'un entraînement moteur à combustion-unité pompe/moteur par une courroie d'accessoires. On peut aussi utiliser un entraînement indépendant de type choisi parmi ceux, par engrenage, par chaîne, par courroie lisse ou crantée et ce, sur n'importe quelle partie tournante du moteur à combustion interne.

Les fonctions de moteur et de pompe hydraulique de l'unité moteur/pompe 20 accouplée au moteur à combustion interne 10 ne sont pas nécessairement regroupées dans une seule machine. On peut utiliser une pompe hydraulique et un moteur hydraulique dans un même plan d'entraînement (donc avec deux poulies distinctes). On peut aussi utiliser une pompe et un moteur hydrauliques montés sur un même axe de rotation (donc une seule poulie).

Dans une autre réalisation du dispositif de motorisation, le système de liaison mécanique qui relie l'unité pompe/moteur au moteur à combustion interne peut comporter un embrayage mécanique. On diminuera fortement le couple de trainée du dispositif lorsque celui ci est au repos mais on augmentera le coût de la solution.

Dans une variante du dispositif de motorisation selon l'invention, le circuit hydraulique peut comporter un inverseur de flux entre le régulateur de pression 64 et le moteur hydraulique 36, ce qui permet de faire fonctionner la prise de force 40 dans les deux sens de rotation.

## Revendications

1. Dispositif de motorisation hybride légère comportant un moteur à combustion interne MCl (10) accouplé, d'une part, à un récepteur principal RP (14) et, d'autre part, par un moyen mécanique (18) de transmission de couple, à une unité pompe/moteur (20) à cylindrée fixe, un circuit hydraulique 30 renfermant, outre l'unité pompe/moteur (20), un moteur hydraulique (36) destiné à entrainer en rotation une prise de force secondaire (37), un accumulateur (44) haute pression renfermant une certaine quantité de fluide sous une haute pression, un réservoir basse pression (46) capable de contenir une quantité de fluide suffisant pour remplir l'accumulateur (44) haute pression, et comprenant un distributeur hydraulique principal (50) entre une partie (34) du circuit hydraulique (30) renfermant l'unité pompe/moteur (20) et une autre partie (32) du circuit hydraulique (30) renfermant le moteur hydraulique (36), le distributeur hydraulique principal (50) pouvant être commandé, soit dans un état fermé, interrompant la circulation de fluide entre les deux parties (32, 34) du circuit hydraulique (30) pour mettre le dispositif dans un état dit de repos, soit dans un état ouvert parallèle durant lequel l'unité pompe/moteur est destinée à fonctionner en pompe hydraulique, soit dans un état ouvert croisé durant lequel l'unité pompe/moteur est destinée à fonctionner en moteur hydraulique,
**caractérisé en ce qu'**il comporte en plus :
• un distributeur hydraulique d'embrayage (56) en parallèle avec l'unité pompe/moteur (20), ledit distributeur d'embrayage pouvant être commandé, soit dans un état fermé pour faire passer le fluide de l'unité pompe/moteur (20), dans le circuit hydraulique (30) soit dans un état ouvert pour dériver le passage du fluide dans le circuit hydraulique (30) par le ledit distributeur d'embrayage (56),
• un distributeur de moteur hydraulique (58) pouvant être commandé, soit dans un état fermé pour isoler le moteur hydraulique (36) du circuit hydraulique (30), soit dans un état ouvert pour permettre le passage du fluide dans le moteur hydraulique (36),
• un régulateur de pression hydraulique (64) comportant une entrée de contrôle Er du niveau d'ouverture du régulateur pour contrôler le débit de fluide dans le moteur hydraulique (36),
• un distributeur d'accumulateur hydraulique (60) pouvant être commandé, soit dans un état ouvert permettant le remplissage ou la vidange de l'accumulateur (44) haute pression à travers l'unité pompe/moteur (20), soit dans un état fermé pour isoler l'accumulateur haute pression (44) du circuit hydraulique (30),
• un calculateur UC (70) configuré pour commander, les états des distributeurs hydrauliques (50, 56, 58, 60), le niveau d'ouverture du régulateur de pression (64), le régime moteur du moteur à combustion interne MCl (10) en fonction de différente configurations de fonctionnement du dispositif.

2. Dispositif de motorisation hybride, selon la revendication 1, **caractérisé en ce que**, dans une utilisation de charge de l'accumulateur (44) haute pression, le distributeur de moteur hydraulique (58) et le distributeur hydraulique d'embrayage (56) étant respectivement commandés dans l'état fermé, le distributeur hydraulique d'accumulateur (60) dans l'état ouvert, le distributeur hydraulique principal (50) est commandé dans l'état ouvert parallèle pour faire fonctionner l'unité pompe/moteur (20) en pompe hydraulique prélevant, par l'intermédiaire du moyen mécanique (18) de transmission de couple, un couple sur le moteur à combustion interne (10) pour débiter du fluide sous pression dans l'accumulateur (44) haute pression depuis le réservoir basse pression (46).

3. Dispositif de motorisation hybride, selon la revendication 1, **caractérisé en ce que** dans une utilisation de décharge de l'accumulateur (44) haute pression, le distributeur de moteur hydraulique (58) et le distributeur hydraulique d'embrayage (56) étant respectivement commandés dans l'état fermé, le distributeur hydraulique d'accumulateur (60) dans l'état ouvert, le distributeur hydraulique principal (50) est commandé dans l'état ouvert croisé, l'accumulateur hydraulique (44) débitant alors du fluide sous pression dans l'unité pompe/moteur (20) fonctionnant en moteur hydraulique pour fournir, par l'intermédiaire du moyen mécanique de transmission de couple (18), un couple additionnel au moteur à combustion interne (10), le calculateur (70) étant configuré pour contrôler le couple total fourni au récepteur principal (14) par la gestion du couple moteur du moteur à combustion interne (10).

4. Dispositif de motorisation hybride, selon la revendication 3, **caractérisé en ce que** le calculateur (70) est également configuré pour contrôler le couple moteur du moteur à combustion interne (10) à partir de mesures de pression dans l'accumulateur (44) haute pression.

5. Dispositif de motorisation hybride, selon la revendication 1, **caractérisé en ce que** dans une utilisation d'entraînement de la prise de force en régime nominal, le distributeur de moteur hydraulique (58) étant dans l'état ouvert, le distributeur d'embrayage hydraulique (56) étant dans l'état fermé, le distributeur d'accumulateur (60) étant commandé dans l'état fermé et le régulateur de pression (64) étant commandé dans l'état d'ouverture maximal, le distributeur hydraulique principal (50) est commandé dans l'état ouvert parallèle, pour faire fonctionner l'unité pompe moteur (20) en pompe hydraulique entrainée par le moteur à combustion interne (10), l'intégralité du débit de fluide fournit par l'unité pompe/moteur (20) étant délivré au moteur hydraulique (36).

6. Dispositif de motorisation hybride selon la revendication 1, **caractérisé en ce que**, dans une utilisation d'entraînement de la prise de force en régime variable, le distributeur de moteur hydraulique (58) étant dans l'état ouvert, le distributeur hydraulique d'accumulateur (60) étant dans l'état ouvert, le distributeur hydraulique principal (50) étant commandé dans l'état ouvert parallèle, pour faire fonctionner l'unité pompe/moteur (20) en pompe hydraulique entrainée par le moteur à combustion interne (10), le calculateur (70) est configuré pour commander le distributeur hydraulique d'embrayage (56) dans l'état ouvert puis dans l'état fermé de manière cyclique, le débit de fluide dans le moteur hydraulique (36) étant fonction du rapport cyclique entre le temps d'ouverture et le temps de fermeture du distributeur hydraulique d'embrayage (56).

7. Dispositif de motorisation hybride selon la revendication 6, **caractérisé en ce que** le calculateur (70) est configuré également pour commander le niveau d'ouverture du régulateur de pression (64) de manière à obtenir une pression en amont du régulateur de pression supérieure à la pression en entrée du moteur hydraulique (36), l'accumulateur (44) haute pression faisant alors office d'amortisseur hydraulique.

8. Dispositif de motorisation hybride selon la revendication 6 ou 7, **caractérisé en ce que** l'ensemble hydraulique formé par l'unité pompe/moteur (20) en parallèle avec le distributeur d'embrayage (56) est relié, par un des accès de fluide dudit ensemble, au distributeur principal (50) par un clapet anti-retour (74) de fluide.

9. Dispositif de motorisation hybride selon la revendication 1 à 8, **caractérisé en ce que** l'accumulateur (44) comporte un capteur de pression fournissant au calculateur (70) une information de pression dans ledit accumulateur (44), le calculateur étant configuré pour commander le distributeur hydraulique principal (50) dans l'état fermé et le distributeur d'embrayage (56) dans l'état ouvert, lorsqu'un consigne de pression dans l'accumulateur (44), enregistrée dans le calculateur (70), est atteinte.

10. Dispositif de motorisation hybride selon l'une des revendications 1 à 9, **caractérisé en ce que** le moyen de transmission de couple (18) entre le moteur à combustion interne et l'unité pompe/moteur (20) à cylindrée fixe comporte une poulie solidaire d'un arbre moteur (16) du moteur à combustion interne (10), une poulie solidaire d'un arbre (17) de l'unité pompe/moteur et une courroie de transmission entre les deux poulies.

## Patentansprüche

1. Leichte hybride Antriebsvorrichtung, die eine Brennkraftmaschine MCI (10) umfasst, die einerseits mit einem Hauptempfänger RP (14) und andererseits durch ein mechanisches Drehmomentübertragungsmittel (18) mit einer Pumpen-/Motoreinheit (20) mit fixem Hubraum, einem Hydraulikkreislauf (30), der neben der Pumpen-/Motoreinheit (20) einen hydraulischen Motor (36) einschließt, der dazu bestimmt ist, eine Sekundärzapfwelle (37) in Drehung anzutreiben, einem Hochdruckspeicher (44), der eine bestimmte Fluidmenge unter hohem Druck einschließt, einem Niederdrucktank (46), der fähig ist, eine Fluidmenge zu enthalten, die ausreicht, um den Hochdruckspeicher (44) zu füllen, und einem hydraulischen Hauptverteiler (50) zwischen einem Teil (34) des Hydraulikkreislaufs (30), der die Pumpen-/Motoreinheit (20) einschließt, und einem anderen Teil (32) des Hydraulikkreislaufs (30), der den Hydraulikmotor (36) einschließt, gekuppelt ist, wobei der hydraulische Hauptverteiler (50) entweder in einen geschlossenen Zustand gesteuert werden kann, der die Fluidzirkulation zwischen den zwei Teilen (32, 34) des Hydraulikkreislaufs (30) unterbricht, um die Vorrichtung in einen sogenannten Ruhezustand zu versetzen, oder in einen offenen parallelen Zustand, während dem die Pumpen-/Motoreinheit dazu bestimmt ist, als Hydraulikpumpe zu funktionieren, oder in einen gekreuzten offenen Zustand, während dem die Pumpen-/Motoreinheit dazu bestimmt ist, als Hydraulikmotor zu funktionieren,
**dadurch gekennzeichnet dass** sie außerdem Folgendes umfasst:
• einen hydraulischen Kupplungsverteiler (56) parallel zu der Pumpen-/Motoreinheit (20), wobei der Kupplungsverteiler entweder in einen geschlossenen Zustand gesteuert werden kann, um das Fluid der Pumpen-/Motoreinheit (20) in den Hydraulikkreislauf (30) durchzulassen, oder in einen offenen Zustand, um die Passage des Fluids in den Hydraulikkreislauf (30) durch den Kupplungsverteiler (56) abzuzweigen,
• einen hydraulischen Motorverteiler (58), der entweder in einen geschlossenen Zustand gesteuert werden kann, um den Hydraulikmotor (36) von dem Hydraulikkreislauf (30) zu isolieren, oder in einen offenen Zustand, um das Durchgehen des Fluids in den Hydraulikmotor (36) zu erlauben,
• einen hydraulischen Druckregler (64), der einen Steuereingang Er des Öffnungsniveaus des Reglers zum Steuern des Fluiddurchflusses in dem Hydraulikmotor (36) umfasst,
• einen hydraulischen Speicherverteiler (60), der entweder in einen offenen Zustand gesteuert werden kann, der das Füllen oder das Entleeren des Hochdruckspeichers (44) durch die Pumpen-/Motoreinheit (20) erlaubt, oder in einen geschlossenen Zustand, um den Hochdruckspeicher (44) von dem Hydraulikkreislauf (30) zu isolieren,
• einen Rechner UC (70), der konfiguriert ist, um die Zustände der hydraulische Verteiler (50, 56, 58, 60), das Öffnungsniveau des Druckreglers (64), die Drehzahl der Brennkraftmaschine MCI (10) in Abhängigkeit von unterschiedlichen Betriebskonfigurationen der Vorrichtung zu steuern.

2. Hybride Antriebsvorrichtung nach Anspruch 1, **dadurch gekennzeichnet, dass** bei einem Ladungsgebrauch des Hochdruckspeichers (44), da der hydraulische Motorverteiler (58) und der hydraulische Kupplungsverteiler (56) jeweils in den geschlossenen Zustand, der hydraulische Speicherverteiler (60) in den offenen Zustand gesteuert sind, der hydraulische Hauptverteiler (50) in den offenen parallelen Zustand gesteuert wird, um die Pumpen-/Motoreinheit (20) als Hydraulikpumpe funktionieren zu lassen, die über das mechanische Drehmomentübertragungsmittel (18) ein Drehmoment auf der Brennkraftmaschine (10) entnimmt, um Fluid unter Druck in den Hochdruckspeicher (44) von dem Niederdruckspeicher (46) zu fördern.

3. Hybride Antriebsvorrichtung nach Anspruch 1, **dadurch gekennzeichnet, dass** bei einem Entladungsgebrauch des Hochdruckspeichers (44), da der hydraulische Motorverteiler (58) und der hydraulische Kupplungsverteiler (56) jeweils in den geschlossenen Zustand, der hydraulische Speicherverteiler (60) in den offenen Zustand gesteuert sind, der hydraulische Hauptverteiler (50) in den gekreuzten offenen Zustand gesteuert wird, wobei der Hydraulikspeicher (44) daher Fluid unter Druck in die Pumpen-/Motoreinheit (20) fördert, die als Hydraulikmotor funktioniert, um über das mechanische Drehmomentübertragungsmittel (18) ein zusätzliches Drehmoment zu der Brennkraftmaschine (10) zu liefern, wobei der Rechner (70) konfiguriert ist, um das Gesamtdrehmoment, das dem Hauptempfänger (14) geliefert wird, durch das Management des Antriebsdrehmoments der Brennkraftmaschine (10) zu steuern.

4. Hybride Antriebsvorrichtung nach Anspruch 3, **dadurch gekennzeichnet, dass** der Rechner (70) auch konfiguriert ist, um das Antriebsdrehmoment der Brennkraftmaschine (10) ausgehend von Druckmessungen in dem Hochdruckspeicher (44) zu steuern.

5. Hybride Antriebsvorrichtung nach Anspruch 1, **dadurch gekennzeichnet, dass** bei einem Antriebsgebrauch der Zapfwelle im Nennbetrieb, da der hydraulische Motorverteiler (58) in dem offenen Zustand ist, der hydraulische Kupplungsverteiler (56) in dem geschlossenen Zustand ist, der Speicherverteiler (60) in den geschlossenen Zustand gesteuert ist und der Druckregler (64) in den maximalen Öffnungszustand gesteuert ist, der hydraulische Hauptverteiler (50) in den parallelen offenen Zustand gesteuert wird, um die Pumpen-/Motoreinheit (20) als Hydraulikpumpe funktionieren zu lassen, die von der Brennkraftmaschine (10) angetrieben wird, wobei der gesamte Fluiddurchfluss, der von der Pumpen-/Motoreinheit (20) geliefert wird, zu dem Hydraulikmotor (36) geliefert wird.

6. Hybride Antriebsvorrichtung nach Anspruch 1, **dadurch gekennzeichnet, dass** bei einem Antriebsgebrauch der Zapfwelle mit variabler Drehzahl, da der hydraulische Motorverteiler (58) in dem offenen Zustand ist, der hydraulische Speicherverteiler (60) in dem offenen Zustand ist, der hydraulische Hauptverteiler (50) in den parallelen offenen Zustand gesteuert wird, um die Pumpen-/Motoreinheit (20) als Hydraulikpumpe funktionieren zu lassen, die von der Brennkraftmaschine (10) angetrieben wird, der Rechner (70) konfiguriert ist, um den hydraulischen Kupplungsverteiler (56) zyklisch in den offenen Zustand, dann in den geschlossenen Zustand zu steuern, wobei der Fluiddurchfluss in dem Hydraulikmotor (36) von dem zyklischen Verhältnis zwischen der Öffnungszeit und der Schließzeit des hydraulischen Kupplungsverteilers (56) abhängt.

7. Hybride Antriebsvorrichtung nach Anspruch 6, **dadurch gekennzeichnet, dass** der Rechner (70) auch konfiguriert ist, um das Öffnungsniveau des Druckreglers (64) derart zu steuern, dass stromaufwärts des Druckreglers ein Druck erreicht wird, der höher ist als der Druck am Eingang des Hydraulikmotors (36), wobei der Hochdruckspeicher (44) als hydraulischer Dämpfer dient.

8. Hybride Antriebsvorrichtung nach Anspruch 6 oder 7, **dadurch gekennzeichnet, dass** die Hydraulikeinheit, die von der Pumpen-/Motoreinheit (20) parallel mit dem Kupplungsverteiler (56) gebildet wird, durch einen Fluidzugang der Einheit mit dem Hauptverteiler (50) durch ein Fluidrückschlagventil (74) verbunden ist.

9. Hybride Antriebsvorrichtung nach Anspruch 1 bis 8, **dadurch gekennzeichnet, dass** der Speicher (44) einen Druckfühler umfasst, der dem Rechner (70) eine Druckinformation in dem Speicher (44) liefert, wobei der Rechner konfiguriert ist, um den hydraulischen Hauptverteiler (50) in den geschlossenen Zustand zu steuern und den Kupplungsverteiler (56) in den offenen Zustand, wenn ein Drucksollwert in dem Speicher (44), der in dem Rechner (70) gespeichert ist, erreicht wird.

10. Hybride Antriebsvorrichtung nach einem der Ansprüche 1 bis 9, **dadurch gekennzeichnet, dass** das Drehmomentübertragungsmittel (18) zwischen der Brennkraftmaschine und der Pumpen-/Motoreinheit (20) mit fixem Hubraum eine Scheibe umfasst, die fest mit einer Antriebswelle (16) der Brennkraftmaschine (10), einer Scheibe, die fest mit einer Welle (17) der Pumpen-/Motoreinheit und einem Übertragungsriemen zwischen den zwei Scheiben verbunden ist.

## Claims

1. A light hybrid drive device comprising an internal combustion engine MCI (10) that is coupled, on the one hand, to a main receiver RP (14) and, on the other hand, by a mechanical torque transmission means (18), to a fixed displacement pump/engine unit (20), a hydraulic circuit (30) that contains, in addition to the pump/engine unit (20), a hydraulic engine (36) for rotating a secondary take-off drive (37), a high-pressure accumulator (44) that contains a certain quantity of fluid under high pressure, a low-pressure tank (46) capable of containing a sufficient quantity of fluid to fill the high-pressure accumulator (44) and including a main hydraulic valve (50) between a part (34) of the hydraulic circuit (30) that contains the pump/engine unit (20) and another part (32) of the hydraulic circuit (30) that contains the hydraulic engine (36), the main hydraulic valve (50) being able to be controlled, either in a closed state, interrupting the circulation of fluid between the two parts (32, 34) of the hydraulic circuit (30) to put the device into a state designated a state of rest, or in a parallel open state, during which the pump/engine unit is intended to function as a hydraulic pump, or in a crossed open state, during which the pump/engine unit is intended to function as a hydraulic engine, **characterized in that** it further comprises:
• a hydraulic clutch distributor (56) in parallel with the pump/engine unit (20), said clutch distributor being able to be controlled, either in a closed state to pass the fluid of the pump/engine unit (20), in the hydraulic circuit (30) or in an open state to divert the passage of the fluid in the hydraulic circuit (30) by said clutch distributor (56),
• a hydraulic engine distributor (58), being able to be controlled, either in a closed state for isolating the hydraulic engine (36) from the hydraulic circuit (30), or in an open state for permitting the passage of the fluid in the hydraulic engine (36),
• a hydraulic pressure regulator (64) comprising an inlet Er for controlling the level to which the regulator opens in order to control the flow of fluid in the hydraulic engine (36),
• a hydraulic accumulator valve (60) being able to be controlled either in an open state, permitting the filling or the emptying of the high-pressure accumulator (44) through the pump/engine unit (20), or in a closed state for isolating the high-pressure accumulator (44) from the hydraulic circuit (30),
• a computer UC (70) that is configured so as to control the states of the hydraulic valves (50, 56, 58, 60), the degree to which the pressure regulator (64) opens, the engine speed of the internal combustion engine MCI (10) on the basis of various operational configurations of the device.

2. The hybrid drive device according to Claim 1, **characterized in that**, in a charge use of the high-pressure accumulator (44), the hydraulic engine distributor (58) and the hydraulic clutch distributor (56) being respectively controlled in the closed state, the hydraulic accumulator valve (60) in the open state, the main hydraulic valve (50) is controlled in the open parallel state to operate the pump/engine unit (20) as a hydraulic pump drawing, by means of the mechanical torque transmission means (18) a torque off the internal combustion engine (10) to deliver fluid under pressure in the high-pressure accumulator (44) from the low-pressure tank (46).

3. The hybrid drive device according to Claim 1, **characterized in that** in a discharge use of the high-pressure accumulator (44), the hydraulic engine distributor (58) and the hydraulic clutch distributor (56) being respectively controlled in the closed state, the hydraulic accumulator valve (60) in the open state, the main hydraulic valve (50) is controlled in the crossed open state, the hydraulic accumulator (44) then delivering fluid under pressure in the pump/engine unit (20) functioning as a hydraulic engine to supply, by means of the mechanical torque transmission means (18), an additional torque to the internal combustion engine (10), the computer (70) being configured to control the total torque supplied to the main receiver (14) by the management of the engine torque of the engine torque of the internal combustion engine (10).

4. The hybrid drive device according to Claim 3, **characterized in that** the computer (70) is also configured to control the engine torque of the internal combustion engine (10) from measurements of pressure in the high-pressure accumulator (44).

5. The hybrid drive device according to Claim 1, **characterized in that** in a driving use of the power take-off at nominal rate, the hydraulic engine distributor (58) being in the open state, the hydraulic clutch distributor (56) being in the closed state, the accumulator valve (60) being controlled in the closed state and the pressure regulator (64) being controlled in the maximum open state, the main hydraulic valve (50) is controlled in the parallel open state, to operate the pump-engine unit (20) as a hydraulic pump driven by the internal combustion engine (10), the entirety of the flow of fluid provided by the pump/engine unit (20) being delivered to the hydraulic engine (36).

6. The hybrid drive device according to Claim 1, **characterized in that**, in a driving use of the power take-off at variable rate, the hydraulic engine distributor (58) being in the open state, the hydraulic accumulator valve (60) being in the open state, the main hydraulic valve (50) being controlled in the open parallel state, to operate the pump/engine unit (20) as a hydraulic pump driven by the internal combustion engine (10), the computer (70) is configured to control the hydraulic clutch distributor (56) in the open state then in the closed state in a cyclical manner, the flow of fluid in the hydraulic engine (36) being a function of the cyclic ratio between the opening time and the closure time of the hydraulic clutch distributor (56).

7. The hybrid drive device according to Claim 6, **characterized in that** the computer (70) is also configured to control the level of opening of the pressure regulator (64) so as to obtain a pressure upstream of the pressure regulator greater than the pressure at the inlet of the hydraulic engine (36), the high-pressure accumulator (44) then acting as a hydraulic damper.

8. The hybrid drive device according to Claim 6 or 7, **characterized in that** the hydraulic assembly formed by the pump/engine unit (20) in parallel with the clutch distributor (56) is connected, by one of the fluid accesses of said assembly, to the main valve (50) via a non-return fluid valve (74).

9. The hybrid drive device according to Claim 1 to 8, **characterized in that** the accumulator (44) comprises a pressure sensor supplying to the computer (70) information concerning pressure in said accumulator (44), the computer being configured to control the main hydraulic valve (50) in the closed state and the clutch distributor (56) in the open state, when a pressure set-point in the accumulator (44), stored in the computer (70), is reached.

10. The hybrid drive device according to one of Claims 1 to 9, **characterized in that** the torque transmission means (18) between the internal combustion engine and the fixed displacement pump/engine unit (20) comprises a pulley connected to a drive shaft (16) of the internal combustion engine (10), a pulley connected to a shaft (17) of the pump/engine unit and a drive belt between the two pulleys.
